Europäisches Patentamt

European Patent Office

Office européen des brevets

(11) Veröffentlichungsnummer: **0 407 721 A1**

## (12) EUROPÄISCHE PATENTANMELDUNG

(21) Anmeldenummer: **90110331.7**

(22) Anmeldetag: **31.05.90**

(51) Int. Cl.⁵: **B60T 8/40, B60T 8/32**

(30) Priorität: **14.07.89 DE 3923282**

(43) Veröffentlichungstag der Anmeldung:
**16.01.91 Patentblatt 91/03**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Siegel, Heinz**
**Hohenloher Strasse 86**
**D-7000 Stuugart 40(DE)**
Erfinder: **Mergenthaler, Robert**
**Auf Hart 50**
**D-7145 Markgröningen(DE)**

(54) **Vorrichtung zur Dämpfung von Druckschwingungen.**

(57) Die Fahrzeug-Bremsanlage hat einen Hauptbremszylinder (11) zum Erzeugen von Bremsdruck in wenigstens einer Radbremse (14). Zum Vermeiden des Radblockierens beim Bremsen ist zwischen dem Hauptbremszylinder (11) und der Radbremse (14) eine Drucksteuerventilanordnung (26) und eine Pumpe (29) zum Entnehmen von Druckmittel aus der Radbremse (14) vorgesehen. Die Pumpe (29) ist mit ihrem Ausgang (30) über eine Dämpferkammer (32) und eine Drossel (34) mit einem im Nebenschluß zu dieser angeordneten Druckbegrenzungsventil (33) mit dem Hauptbremszylinder (11) verbunden.

Die Drossel (34) und das Druckbegrenzungsventil (33) haben ein gemeinsames hülsenförmiges Gehäuse (42), in dem ein zylindrisch ausgebildetes Schließglied (52) längsbewegbar geführt ist. Dieses hat stirnseitig einen hohlen Bund (59), der in Schließstellung eine Zuströmöffnung (45) für Druckmittel übergreift. Der Bund (59) des Schließgliedes (52) ist zur Bildung der Drossel (34) mit wenigstens einer gegen dessen Stirnseite offenen Durchbrechung (61) versehen.

Das bei durch Partikel blockierter Drossel (34) ansprechende Druckbegrenzungsventil (33) hebt die Querschnittsbegrenzung der Drossel (34) auf, so daß sich diese reinigen kann.

FIG. 2

EP 0 407 721 A1

# VORRICHTUNG ZUR DÄMPFUNG VON DRUCKSCHWINGUNGEN

Stand der Technik

Die Erfindung geht aus von einer Vorrichtung zur Dämpfung von Druckschwingungen nach der Gattung des Hauptanspruchs. Es ist schon eine solche Vorrichtung aus der DE-OS 31 33 111 bekannt, bei der die im Blockierschutzbetrieb von der Pumpe hervorgerufenen Druckschwingungen durch die Wirkung der aufeinander abgestimmten Dämpferkammer und Drossel gemindert werden. Hierdurch wird eine störende Geräuschentwicklung sowie ein Pulsieren des Bremspedals weitgehend vermieden. Da die Drossel die Förderung größerer Druckmittelmengen verzögert, ist parallel zu dieser ein Druckbegrenzungsventil angeordnet, dessen federbelastetes Schließglied bei einem bestimmten Druck öffnet, um die Drossel zu umgehen. Das Druckbegrenzungsventil öffnet auch dann, wenn im Druckmedium enthaltene Partikel die Drossel zusetzen. In diesem Fall ist die dämpfende Wirkung der Vorrichtung weitgehend aufgehoben.

Vorteile der Erfindung

Die erfindungsgemäße Vorrichtung mit den kennzeichnenden Merkmalen des Hauptanspruchs hat demgegenüber den Vorteil, daß durch die konstruktive Verbindung der Drossel mit dem Schließglied des Druck begrenzungsventils auch eine funktionelle Abhängigkeit erzielt wird, welche beim Wirksamwerden des Druckbegrenzungsventils auch eine Vergrößerung des Drosselquerschnitts und damit ein Freispülen der Drossel auslöst. Damit bleibt die Funktion der Vorrichtung zum Dämpfen von Druckschwingungen erhalten. Aufgrund dieser Selbstreinigung kann der Drosselquerschnitt sehr klein gehalten werden, was die Dämpfungswirkung verbessert. Darüber hinaus ergeben sich Fertigungs- und Montagevorteile durch die bauliche Kombination von Drossel und Druckbegrenzungsventil

Durch die in den Unteransprüchen aufgeführten Maßnahmen sind vorteilhafte Weiterbildungen und Verbesserungen der im Hauptanspruch angegebenen Vorrichtung möglich.

Die im Anspruch 2 offenbarte Weiterbildung hat den Vorteil, daß im normalen Bremsbetrieb das Einsteuern von im Hauptbremszylinder erzeugtem Druck in die Vorrichtung vermieden und somit die Elastizität der bremsanlage und demzufolge der Bremspedalweg verringert wird.

Mit der im Anspruch 3 angegebenen Ausgestaltung wird durch die Anordnung des Rückschlagventils innerhalb des Druckbegrenzungs ventils eine axial kurze Bauform erzielt.

Im Anspruch 4 ist eine zweckmäßige Formgebung des Schließgliedes des Druckbegrenzungsventiles gekennzeichnet, um aus der Drossel radial austretendes Druckmittel zum koaxial liegenden Rückschlagventil zu lenken.

Mit der im Anspruch 5 angegebenen Ausgestaltung wird eine Baugruppe aus unverlierbar miteinander verbundenen Teilen (Gehäuse, Schließglied, Schließkugel, Federn und Lochscheibe) des Druckbegrenzungs ventils und des Rückschlagventils geschaffen, die kompakt ausgebildet ist, nach dem Zusammenfügen der Teile geprüft und z. B. durch Einpressen in ein Gehäuse schnell und sicher montiert werden kann.

Bei der im Anspruch 6 offenbarten Ausgestaltung sichert die gleichachsige Führung der Federn bei raumsparender Anordnung deren ungestörte Funktion.

Zeichnung

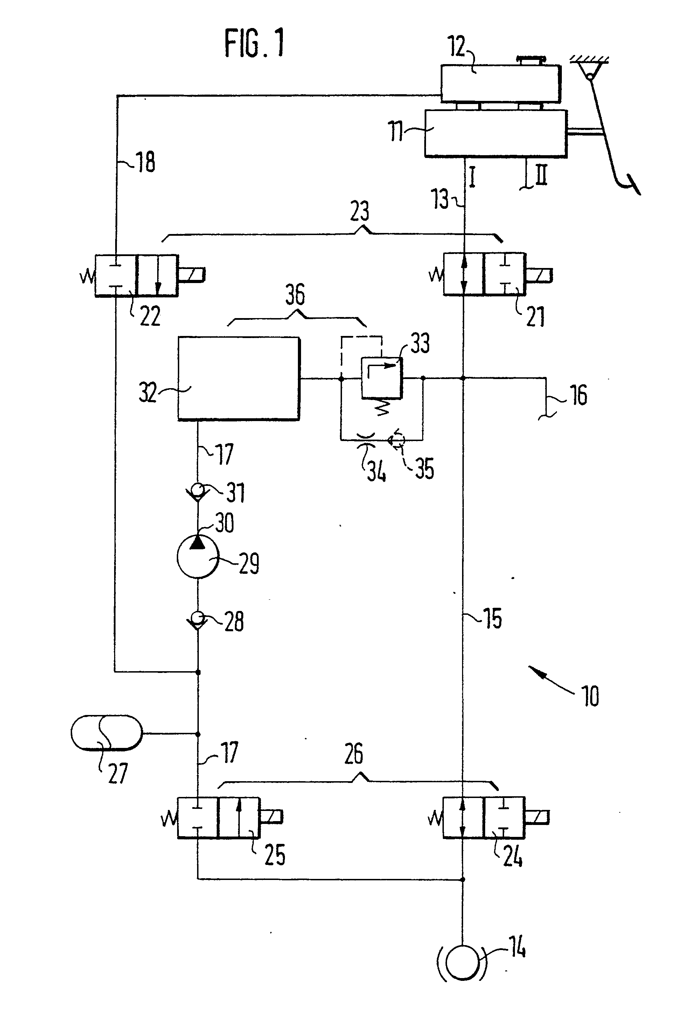

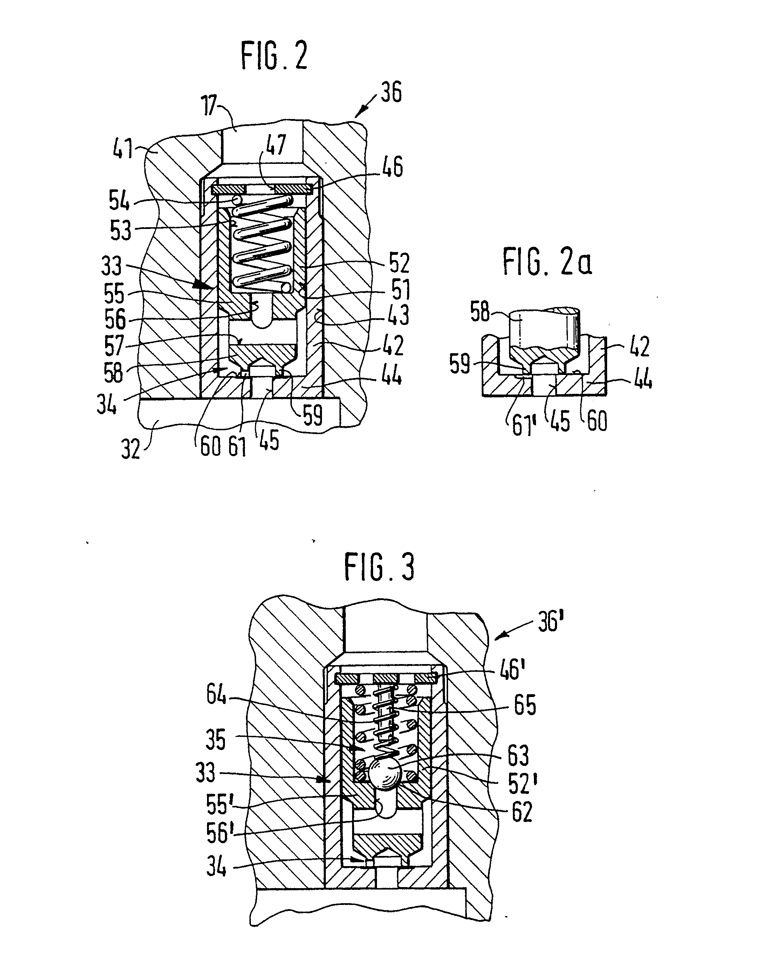

Ausführungsbeispiele der Erfindung sind in der Zeichnung vereinfacht dargestellt und in der nachfolgenden Beschreibung näher erläutert. Es zeigen Figur 1 ein Schema einer hydraulischen Fahrzeug-Bremsanlage mit einer Vorrichtung zur Dämpfung von Druckschwingungen, Figur 2 einen Längsschnitt durch ein mit einer Drossel kombiniertes Druckbegrenzungsventil der Vorrichtung als erstes Ausführungsbeispiel, Figur 2a eine abgewandelte Ausführungsform der Drossel und Figur 3 einen entsprechenden Schnitt durch das mit, einem Rückschlagventil ergänzte Druckbegrenzungsventil nach Figur 2 als zweites Ausführungsbeispiel.

Beschreibung der Ausführungsbeispiele

Die in Figur 1 dargestellte hydraulische Fahrzeug-Bremsanlage 10 hat einen pedalbetätigbaren Hauptbremszylinder 11 mit einem Vorratsbehälter 12 für Druckmittel zum Erzeugen von Bremsdruck in Bremskreisen I und II. Der Bremskreis I weist eine Hauptbremsleitung 13 auf, welche in zu Radbremsen 14 führende Bremsleitungen 15 und 16 aufgegliedert ist. (Es ist nur eine Radbremse 14 im Bremskreis 1 dargestellt; ebenso ist auf die Wiedergabe des für die Offenbarung der Erfindung unwichtigen Bremskreises II verzichtet.) Parallel zur Bremsleitung 15 ist eine Förderleitung 17 vorgesehen. Von dieser zweigt eine Ansaugleitung 18 ab, welche zum Vorratsbehalter 12 des Hauptbremszylinders 11 führt.

In der Hauptbremsleitung 13 ist ein erstes 2/2-Wegeventil 21 und in der Ansaugleitung 18 ein zweites 2/2-Wegeventil 22 angeordnet. Beide Wegeventile 21 und 22 bilden eine erste Drucksteuerventilanordnung 23 zum Vermindern von Antriebsschlupf an angetriebenen Fahrzeugrädern. In der Bremsleitung 15 ist ein drittes 2/2-Wegeventil 24, in der Förderleitung 17 ein viertes 2/2-Wegeventil 25 angeordnet. Diese bilden eine zweite Drucksteuerventilanordnung 26 zum Vermeiden des Radblokkierens beim Bremsen.

An die Förderleitung 17 ist, in Strömungsrichtung gesehen, ein Speicher 27 für Druckmittel angeschlossen. In den nach dem Anschluß der Ansaugleitung 18 an die Förderleitung 17 folgenden Abschnitt sind aufeinanderfolgend ein erstes Rückschlagventil 28, eine Förderpumpe 29 für Druckmittel und auf deren Ausgang 30 folgend ein zweites Rückschlagventil 31 eingefügt. Anschließend folgt eine Dämpferkammer 32 und ein Druckbegrenzungsventil 33 mit einer parallel zu dieser geschalteten Drossel 34, der ein weiteres Rückschlagventil 35 zugeordnet sein kann. Die Dämpferkammer 32, das Druckbegrenzungsventil 33 und die Drossel 34 bilden eine Vorrichtung 36 zur Dämpfung von Druckschwingungen, welche durch den Betrieb der Pumpe 29 erzeugt werden.

Beim normalen Bremsbetrieb nehmen die Wegeventile 21, 22, 24 und 25 die gezeichneten Stellungen ein: Im Hauptbremszylinder 11 erzeugter Bremsdruck wird der Radbremse 14 (sowie in den übrigen Bremsen der beiden Bremskeise I und II) wirksam. Das gegebenenfalls der Drossel 34 zugeordnete Rückschlagventil 35 verhindert dabei den Bremsdruckaufbau in der Dämpferkammer 32. Bei drohendem Radblockieren beim Bremsen wird mittels einer nicht dargestellten elektronischen Steuereinrichtung das Wegeventil 24 in seine Sperrstellung und das Wegeventil 25 in seine Durchlaßstellung geschaltet. Der Bremsdruck in der Radbremse 14 kann sich durch die Förderleitung 17 im Speicher 27 in einem durch die Steuereinrichtung vorbestimmten Maß durch die Aufnahme von Druckmittel abbauen. Gleichzeitig wird die Pumpe 29 von der Steuereinrichtung eingeschaltet und das Druckmittel durch die Dämpferkammer 32 und die Drossel 34 zurück zum Hauptbremszylinder 11 gefördert. Dabei vermindert die Vorrichtung 36 die von der Pumpe 29 hervorgerufenen Druckschwingungen.

Beim Auftreten von Antriebsschlupf an dem der Radbremse 14 zugeordneten Antriebsrad werden von der Steuereinrichtung das Wegeventil 22 auf Durchlaßstellung und das Wegeventil 21 auf Sperrstellung geschaltet, während die Wegeventile 24 und 25 der Drucksteuerventilanordnung 26 ihre gezeichneten Grundstellungen einnehmen. In diesem Betriebsfall fördert die eingeschaltete Pumpe 29 Druckmittel aus dem Vorratsbehälter 12 durch die Ansaugleitung 18 sowie durch die in der Förderleitung 17 liegende Vorrichtung 36 in die Bremsleitung 15, um in der Radbremse 14 Bremsdruck zu erzeugen. Dabei öffnet das auf einen niedrigen Differenzdruck eingestellte Druckbegrenzungsventil 33 und ermöglicht einen schnellen Druckaufbau in der Radbremse, 14.

Bei der in Figur 2 ausschnittsweise wiedergegebenen Vorrichtung 36 zur Dämpfung von Druckschwingungen ist ein Gehäuse 41 eines Aggregats dargestellt, welches die Dämpferkammer 32, das Druckbegrenzungsventil 33 und die Drossel 34 aufnimmt. Die Drossel 34 und, das Druckbegrenzungsventil 33 haben ein gemeinsames hülsenförmiges Gehäuse 42, welches in eine Bohrung 43 des Aggregatgehäuses 41 eingepreßt ist. Im der Dämpferkammer 32 zugewandten Boden 44 des Gehäuses 42 befindet sich eine Zuströmöffnung 45 für Druckmittel. Auf der gegenüberliegenden Seite ist das Gehäuse 42 durch eine eingebördelte Lochscheibe 46 mit einer Ausströmöffnung 47 abgeschlossen. Auf dieser Seite ist die Förderleitung 17 fortgesetzt.

Das Gehäuse 42 hat eine zylindrische Innenbohrung 51, in der ein passend ausgebildetes Schließglied 52 des Druckbegrenzungsventils 33 längsbewegbar geführt ist. Das Schließglied 52 ist mit einer gegen die Lochscheibe 46 offenen, hohlzylindrischen Ausnehmung 53 versehen. In der Ausnehmung 53 ist eine zylindrische Schraubendruckfeder 54 geführt, welche sich einerseits gegen einen die Ausnehmung 53 axial begrenzenden Boden 55 und andererseits gegen die Loch scheibe 46 abstützt. Vom Boden 55 des Schließgliedes 52 geht eine axial verlaufende Bohrung 56 aus, welche in eine Querbohrung 57 mündet, die in einem im Durchmesser verjüngten Abschnitt 58 des Schließgliedes angeordnet ist. Stirnseitig ist das Schließglied 52 mit einem Bund 59 versehen. Der aufgrund der Wirkung der Schraubendruckfeder 54 am Gehäuseboden 44 abgestützte Bund 59 übergreift die Zuströmöffnung 45 des Gehäuses 42. Im Bereich des Bundes 59 ist der Gehäuseboden 44 als Ventilsitz 60 ausgebildet, dessen Durchmesser größer ist als der des Bundes. Der Bund 59 bildet mit dem Ventilsitz 60 ein Schließventil. Zur Bildung der Drossel 34 ist der Bund 59 des Schließgliedes 52 mit einer zur Stirnseite des Bundes offenen Durchbrechung 61 versehen. Der Querschnitt der Durchbrechung 61 kann dreieckförmig, halbkreisförmig, rechteckig oder ähnlich begrenzt sein. Eine Durchbrechung 61′ kann anstelle im Bund 59 auch im Ventilsitz 60 des Gehäusebodens 44 liegen, wie dies in Figur 2a gezeigt ist.

Bei der Förderung von Druckmittel während einer Bremsdruckregelung im Blockierschutzbetrieb durchströmt dieses die Zuströmöffnung 45 im Gehäuseboden 44 des Gehäuses 42 und gelangt durch die Durchbrechung 60 der Drossel 34 in die Innenbohrung 51 des Gehäuses. Das Druckmittel wird durch die Querbohrung 57 und die Axialbohrung 56 in die Ausnehmung 53 des Schließgliedes 52 geleitet, welche es durch die Ausströmöffnung 47 in der Lochscheibe 46 in die Förderleitung 17 verläßt. Bei durch Partikel verstopfter Drossel 34 öffnet das im Nebenschluß zur Drossel angeordnete Druckbegrenzungsventil 33 bei einem Druck, der aufgrund der Vorspannung der Schraubendruckfeder 54 z. B. um 30 bar höher liegt als der Hauptzylinderdruck hinter dem Druckbegrenzungsventil 33. Bei geöffnetem Druckbegrenzungsventil 33 ist die vom Gehäuseboden gegebene Begrenzung des Querschnitts der Durchbrechung 61 aufgehoben. Die störenden Partikel können sich daher lösen und aus dem Druckbegrenzungsventil 33 gespült werden. Das nach dem Wegfall des Strömungswiderstandes in der Drossel 34 durch Federkraft schließende Druckbegrenzungsventil 33 stellt somit die ordnungsgemäße Funktion der Drossel wieder her.

Bei der Förderung von Druckmittel während einer Antriebsschlupfregelung durch die eingeschaltete Pumpe 29 öffnet das auf Differenzdruck eingestellte pruckbegrenzungsventil 33 bei zunächst fehlendem Gegendruck und ermöglicht so einen raschen Druckaufbau in der Radbremse 14.

Im Unterschied zum vorbeschriebenen Ausführungsbeispiel ist beim in Figur 3 dargestellten Ausführungsbeispiel der Vorrichtung 36′ das Rückschlagventil 35 in das Schließglied 52′ des Druckbegrenzungs ventils 33 eingefügt. Hierzu ist im Boden 55′ des Schließgliedes 52′ ein die Axialbohrung 56′ begrenzender Ventilsitz 62 ausgebildet. Diesem ist eine Schließkugel 63 des Rückschlagventils 35 zugeordnet. Die Schließkugel 63 ist mittels einer zylindrischen Schraubendruckfeder 64 kleinen Durchmessers gegen den Ventilsitz 62 vorgespannt. Die Schraubendruckfeder 64 ist auf einem gleichachsig zur Längsachse des Schließgliedes 52′ verlaufenden zylindrischen Dorn 65 der Lochscheibe 46′ längsgeführt, an der sich die Schraubendruckfeder abstützt. Die Vorspannung der Schraubendruckfeder 64 ist derart gewählt, daß das in Reihe zur Drossel 34 liegende Rückschlagventil 35 bei einem sehr viel geringem Druck öffnet als das Druckbegrenzungsventil 33.

**Ansprüche**

1. Vorrichtung (36) zur Dämpfung von Druckschwingungen in einer hydraulischen Fahrzeug-Bremsanlage (10) mit einem wenigstens einkreisigen Hauptbremszylinder (11) zum Erzeugen von Bremsdruck in wenigstens einer Radbremse (14), mit einer Drucksteuerventilanordnung (26) zwischen dem Hauptbremszylinder und der Radbremse und mit einer Pumpe (29) zum Entnehmen von Druckmittel aus der Radbremse zum Vermeiden des Radblockierens beim Bremsen, wobei die Pumpe mit ihrem Ausgang (30) über eine Dämpferkammer (32) und eine Drossel (34) mit einem im Nebenschluß zu dieser angeordneten, ein federbelastetes Schließglied (52) aufweisendes Druckbegrenzungsventil (33) mit dem Hauptbremszylinder verbunden ist,
gekennzeichnet durch die Merkmale:

a) Die Drossel (34) und das Druckbegrenzungsventil (33) haben ein gemeinsames hülsenförmiges Gehäuse (42) mit einer am Gehäuseboden (44) angeordneten Zuströmöffnung (45),

b) im Gehäuse (42) ist das zylindrisch ausgebildete Schließglied (52) längsbewegbar geführt, welches stirnseitig einen die Zuströmöffnung (45) übergreifenden, am Gehäuseboden (44) abgestützten hohlen Bund (59) hat,

c) der Bund (59) bildet mit einem zugeordneten Ventilsitz (60) des Gehäusebodens (44) ein Schließventil,

d) der Bund (59) des Schließgliedes (52) und/oder der Ventilsitz (60) des Gehäusebodens (44) ist zur Bildung der Drossel (34) mit wenigstens einer gegen dessen Stirnseite offenen Durchbrechung (61, 61′) versehen.

2. Vorrichtung nach Anspruch 1, dadurch gekennzeichnet, daß zwischen der Dämpferkammer (32) und dem Hauptbremszylinder (11) ein in Reihe zur Drossel (34) liegendes Rückschlagventil (35) angeordnet ist.

3. Vorrichtung nach Anspruch 2, dadurch gekennzeichnet, daß das Schließglied (52′) auf seiner vom Bund (59) abgewandten Seite mit einer hohlzylindrischen Ausnehmung (53) versehen ist, an deren Boden (55′) ein mit der Drossel (34) in Verbindung stehender Ventilsitz (62) angeordnet ist, an dem eine federbelastete Schließkugel (63) des Rückschlagventils (35) angreift.

4. Vorrichtung nach Anspruch 2, dadurch gekennzeichnet, daß vom Ventilsitz (62) des Schließgliedes (52′) eine axial verlaufende Bohrung (56′) ausgeht, welche in eine Querbohrung (57) mündet, die in einem im Durchmesser verjüngten, den Bund (59) mit Durchbrechung (61) aufweisenden Abschnitt (58) des Schließgliedes angeordnet ist.

5. Vorrichtung nach einem der Ansprüche 1 bis 4, dadurch gekennzeichnet, daß das Gehäuse (42) auf seiner von der Zuströmöffnung (45) abgewandten Seite mit einer Lochscheibe (46) verschlossen ist, an die die Feder (54) wenigstens eines der Ventile (33) abgestützt ist.

6. Vorrichtung nach einem der Ansprüche 1 bis 5, dadurch gekennzeichnet, daß die als zylindrische Schraubendruckfeder (54) ausgebildete Feder des Druckbegrenzungsventils (33) in der hohlzylindrischen Ausnehmung (53) des Schließgliedes (52) und die zylindrische Schraubendruckfeder (64) des Rückschlagventils (35) auf einem gleichachsig zum Schließglied verlaufenden zylindrischen Dorn (65) der Lochscheibe (46′) längsgeführt ist.

# FIG.1

# FIG. 2

# FIG. 2a

# FIG. 3

Europäisches Patentamt

**EUROPÄISCHER RECHERCHENBERICHT**

Nummer der Anmeldung

EP    90 11 0331

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y,D | DE-A-3133111 (ROBERT BOSCH) <br> * Seite 4, Absatz 6 - Seite 6, Absatz 2; Anspruch 7; Figur * <br> --- | 1 | B60T8/40 <br> B60T8/32 |
| Y | DE-A-1903313 (WALTER VON WEIZENBECK) <br> * Seite 3, letzter Absatz - Seite 4, Absatz 1; Figuren * <br> --- | 1 | |
| A | DE-A-2128168 (TELDIX) <br> * Seite 4, Absatz 2 - Seite 5, Absatz 1; Figur 1 * <br> --- | 1, 2 | |
| A | DE-A-2643860 (ROBERT BOSCH) <br> * Seite 5, Absatz 1 - Seite 6, Absatz 2; Figuren 1, 2 * <br> --- | 1 | |
| A | EP-A-181643 (TOYOTA) <br> * Seite 26, Zeilen 1 - 23; Figuren 1, 8-10 * <br> --- | 1 | |
| A | DE-A-3844126 (AKEBONO BRAKE INDUSTRY) <br> * Spalte 4, Zeile 18 - Spalte 5, Zeile 14; Figur * <br> --- | 2-4, 6 | **RECHERCHIERTE SACHGEBIETE (Int. Cl.5 )** |
| A | FR-A-1207673 (TRICHOT-CHARMETTE) <br> * Seite 2, linke Spalte, Zeile 53 - rechte Spalte, Zeile 25; Figur 1 * <br> ----- | 5 | B60T <br> G05D <br> F16L <br> F04B <br> F16K |

Der vorliegende Recherchenbericht wurde für alle Patentansprüche erstellt

| Recherchenort | Abschlußdatum der Recherche | Prüfer |
|---|---|---|
| DEN HAAG | 22 OKTOBER 1990 | MEIJS P. |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus andern Gründen angeführtes Dokument
..................................................................................
& : Mitglied der gleichen Patentfamilie, übereinstimmendes
　　Dokument

EPO FORM 1503 03.82 (P0403)